(19) Europäisches Patentamt
European Patent Office
Office européen des brevets

(11) **EP 2 209 345 A2**

(12) **EUROPEAN PATENT APPLICATION**

(43) Date of publication:
**21.07.2010 Bulletin 2010/29**

(51) Int Cl.:
***H04W 64/00*** *(2009.01)*

(21) Application number: **10250036.0**

(22) Date of filing: **11.01.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **15.01.2009 US 354131**

(71) Applicant: **Motorola, Inc.,
A Corporation of the State of Delaware
Schaumburg, IL 60196 (US)**

(72) Inventors:
• **Saidi, Ali
Ilinois 60175 (US)**
• **Chiricescu, Silviu
New York, NY 10010 (US)**
• **Rittle,LKoren J
Ilinois 60607 (US)**
• **Yu, Yang
San Jose (CA)**

(74) Representative: **McLeish, Nicholas Alistair
Maxwell
Boult Wade Tennant
Verulam Gardens
70 Gray's Inn Road
London WC1X 8BT (GB)**

(54) **Method and appartus for determining the location of a node in a wireless system**

(57) During operation, a node (104) will determine a particular probability of achieving a successful location. When battery resources are below a threshold the node will utilize a minimum probability for success in determining how many time-slots to collect RSSI measurements. However, if battery resources are above the threshold, a higher probability of achieving a successful location than the minimum may be utilized. After the particular probability of achieving a successful location is determined, a number of time-slots (L) are determined. L comprises a number of time slots that the node must remain awake for to achieve the particular probability of achieving a successful location. The node will then remain awake for L time slots, and compute a location based on measurements taken within those L time slots.

FIG. 1
100

**EP 2 209 345 A2**

**Description**

Field of the Invention

The present invention relates generally to radiolocation and in particular, to a method and apparatus for an energy efficient determination of a location of a node within a wireless communication system.

Background of the Invention

A variety of systems have been proposed that call for the ability for wireless sensor networks (WSNs) to determine the location of a node within a wireless communication system. For example, in asset control, it is desirable to know the locations of objects (e.g., laptop computers, cell phones, shipping containers with a built-in sensor node, shared hospital equipment with either an attached or built-in sensor node, ... , etc.) within the confines of, say, an office building, factory floor, or other general or specialize space. Unfortunately, many location applications for wireless sensor networks are characterized by their severe resource constraints (e.g. energy, bandwidth, processing power, and memory), which have a considerable impact on the location performance. For example, many WSN applications require very long lifetime to avoid frequent re-charging or battery replacement. A difficulty in designing an efficient location technique is managing the tradeoff between resource usage and the location performance. Minimizing resource consumption leads to degradation in location accuracy, while increasing resource consumption leads to a more accurate location estimate. Therefore a need exists for a method and apparatus for determining the location of a node within a wireless communication system that balances resource constraints with location accuracy.

Brief Description of the Drawings

FIG. 1 Illustrates a typical floor plan of an office building in which are located a number of wireless devices involved in determining each other's location.
FIG. 2 shows the probability of successfully obtaining 3 good RSSI readings as a function of listening period (L) for N=64 and M=12.
FIG. 3 shows the error bound on the average RSSI and $\varepsilon$, that can be guaranteed by the Chernoff bound with probability $\delta$.
FIG. 4 is a block diagram of blind node 104 equipped to determine its location via signal-strength measurements.
FIG. 5 is a flow chart showing operation of node 104.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. It will further be appreciated that certain actions and/or steps may be described or depicted in a particular order of occurrence while those skilled in the art will understand that such specificity with respect to sequence is not actually required. Those skilled in the art will further recognize that references to specific implementation embodiments such as "circuitry" may equally be accomplished via replacement with software instruction executions either on general purpose computing apparatus (e.g., CPU) or specialized processing apparatus (e.g., DSP). It will also be understood that the terms and expressions used herein have the ordinary technical meaning as is accorded to such terms and expressions by persons skilled in the technical field as set forth above except where different specific meanings have otherwise been set forth herein.

Detailed Description of the Drawings

In order to address the above-mentioned need, a method and apparatus for an energy efficient determination of a location within a wireless communication system is provided herein. During operation, a node will determine a particular probability of successfully locating a node. In one embodiment, when battery resources are below a threshold, the node will utilize a minimum probability for success in determining how many time-slots to collect RSSI measurements. (However, if battery resources are above the threshold, a higher probability of achieving a successful location than the minimum may be utilized). After a particular probability of achieving a successful location is determined, a number of time-slots (L) are determined. L comprises a number of time slots that the node must remain awake to achieve the particular probability of achieving a successful location. The node will then remain awake for L time slots, and compute a location based on measurements taken within those L time slots.

In another embodiment, the node will periodically/continuously adjust the number of time slots L based on requirements of an application (e.g. the probability of successfully determining the location) to minimize battery consumption. In addition, the threshold may comprise a time-varying threshold that is dependent upon the requirements of a particular application that is requesting a location. As the application changes, the threshold may change as well.

The present invention encompasses a method for a node within a wireless communication system to determine a location. The method comprises the steps of determining battery resources, determining a particular probability of achieving a successful location that is based on the battery resources, and determining an amount of time to stay awake. The amount of time to stay awake is based on the particular probability of achieving the successful location. Wireless measurements are then collected during the amount of time that the node is awake the location is determined based on the wireless measurements collected.

The present invention additionally encompasses a method for a node within a wireless communication system to determine a location. The method comprises the steps of determining battery resources available to the node, determining a minimum probability of achieving a successful location, and determining a number of time slots to stay awake. As discussed, the number of time slots to stay awake is based on the particular probability of achieving the successful location. Received signal strength indication (RSSI) measurements are collected during the time slots that the node is awake, and the location is determined based on the RSSI measurements collected.

The present invention additionally encompasses an apparatus comprising a battery and logic circuitry. The logic circuitry accesses the battery to determine battery resources. The logic circuitry also determines a particular probability of achieving a successful location that is based on the battery resources, determines an amount of time to stay awake, wherein the amount of time to stay awake is based on the particular probability of achieving the successful location, collects wireless measurements during the amount of time that the node is awake, and determines the location based on the wireless measurements collected.

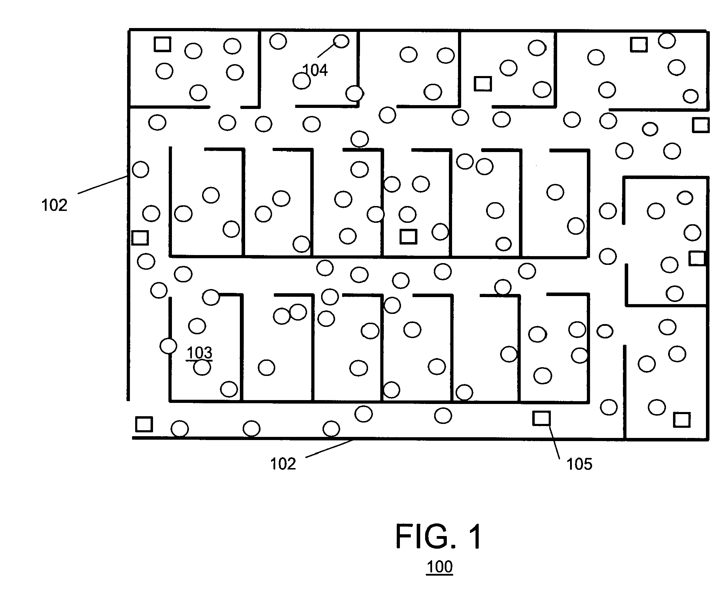

Turning now to the drawings, wherein like numerals designate like components, FIG. 1 is a block diagram of communication system 100 deployed over a floor plan of an interior of an office building. Communication system 100 comprises a number of wireless devices 104-105 involved in determining a particular node's location. The office building comprises perimeter wall 102 that encloses a plurality of offices 103 (only one labeled).

Circular objects, or nodes 104 (only one labeled) represent wireless devices, the locations of which are to be determined. Because the locations of nodes 104 are to be determined, these nodes 104 are referred to as "blindfolded" nodes or simply "blind" nodes. Blindfolded nodes 104 can include, for example, transceiver security tags attached to valuable assets such as lap top computers, or be embedded in wireless communication devices including cellular telephones. Rectangular objects 105 (only one labeled) represent reference nodes. The locations of nodes 105 are known, or can be easily and accurately determined to within some measurement accuracy (e.g., via physical measurement or via GPS).

It should be noted that although FIG. 1 shows nodes 104-105 existing within a two-dimensional space, one of ordinary skill in the art will recognize that nodes 104-105 may be located in other environments, including 3-dimensional spaces. For example, nodes 104 may comprise golf carts equipped with wireless transceivers located on a golf course. In a similar manner, nodes 104 may comprise inventory located within a multi-level warehouse. Irrespective of the environment where nodes 104 operate, reference nodes 105 are dispersed in known locations to assist in locating blindfolded nodes 104. More particularly, a location technique is utilized where a blindfolded node determines the received power for all reference nodes 105 within its range. From the received power, and the known location of reference nodes 105, an estimation is made of the location of each blindfolded node 104 based on a mathematical weighting of the received powers.

Location systems can be classified into two general categories. The first category assumes a high density of reference nodes105. Under this assumption, during each sampling period nodes 104 measure received signal strength indications (RSSIs) from a large number of reference nodes 105 and choose the best reference nodes for location. The second category, on the other hand, assumes low density of the reference nodes 105. Under this assumption, nodes 104 measure RSSIs from the same set of nodes 105 for several sampling periods and average the measurements to remove background noise to achieve higher accuracy. The measurement redundancy in these approaches allows the trade-off between accuracy and energy consumption.

As discussed above, a difficulty in designing an efficient location system is managing the tradeoff between resource usage and the location performance. Reducing resource consumption leads to degradation in location accuracy, while increased resource consumption leads to a more accurate location estimate. In order to address this issue, each node 104 will determine a probability of successfully determining its location that a particular application requires. Preferably, the probability of success chosen will depend on battery resources available to node 104. For example, when battery resources are low, a lower probability of success might be acceptable when compared to the probability of success required when battery resources are high. It should be noted that a probability of success is defined as the probability that a location estimate will return a value within a minimum distance (e.g., 10 feet) from a node's true location. The probability of success can also be defined as a probability of successfully obtaining a number of good RSSI readings as a function of listening period (L).

After a probability for success has been determined, each node 104 will compute a number of time-slots (L) that it must remain awake for to achieve the probability of success. Node 104 will then wake up and listen for L time slots, and compute a location based on the RSSI measurements taken within those L time slots.

Computing L based on the minimum probability for success:

A primary assumption is that location is computed locally at nodes 104 based on RSSI readings from nodes 105. In contrast, centralized location where RSSI readings from nodes 104 are collected by the nodes 105 and routed to a central location leads to exponential growth of the network traffic as a function of reference nodes which makes the approach not scalable and very complex.

Most RSSI based locating systems have a redundancy built into their data collection scheme to make sure that the best RSSI values are collected for a given location algorithm. The amount of redundancy that can be translated to location accuracy can be traded-off for longer battery life.

As discussed, location finding systems and their corresponding RSSI measurement mechanisms can be categorized into two general classes of systems with high and low density of reference points (nodes 105). The first class of location systems employs a high density of reference points (i.e., nodes 105). Nodes 104 in such systems, in general, are assumed to be able to measure usable RSSIs from many different reference nodes during any given RSSI transmission period. An RSSI transmission period is defined as the period that all reference points (nodes 105) transmit a non-repeated, broadcast beacon in either a synchronized or unsynchronized fashion. Nodes 104 listen to all the reference points (nodes 105) during the RSSI transmission period. Nodes 104 are not aware of any synchronization used between nodes 105 during the RSSI transmission period. Then they choose a sub-set of the received RSSIs that are considered to be the best RSSIs to determine their locations locally based on a location algorithm. Location algorithms are usually a variation of the triangulation technique which can vary for different location systems.

Alternatively, to conserve energy, a mobile node can wake-up and listen to the beacons of nodes 105 for a shorter period of time (listening period) and collect RSSIs from a smaller number of reference points. However, listening for a shorter period of time, with some probability, results in failing to obtain sufficient RSSI reading to perform location. The system should be capable of predicting the probability of failure as a function of listening period and therefore be able to trade-off listening period (i.e. energy consumption) for probability of failure.

Let N and L be the number of reference points (nodes 105) and number of time slots in a listening period respectively. Also, suppose that the nodes 104 at any given point can obtain M usable RSSI readings. Note that M is a function of fixed point locations and can be determined for any give deployment scenario. Assuming that the location algorithm requires K good RSSI readings, the probability of successfully determining the mobile node's location is given by,

$$\Pr(success) = 1 - \Pr(failure) = 1 - \Pr(\# \ of \ good \ RSSIs < K) \qquad (1)$$

which can be written as:

$$\Pr(success) = 1 - \sum_{i=0}^{K-1} \binom{L}{i} \left(\frac{M}{N}\right)^i \left(\frac{N-M}{N}\right)^{L-i} \qquad (2)$$

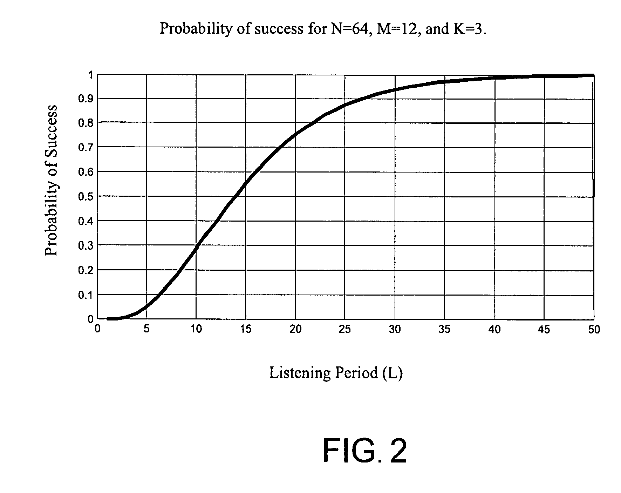

FIG. 2 shows the probability of successfully obtaining 3 good RSSI readings as a function of listening period (L) for N=64 and M=12. A probability of success -vs- listening period curve can also be easily obtained experimentally for any given deployment scenario and locating algorithm. This curve can then be used to determine the desired trade-off between the sleep-cycle period (which directly affects battery consumption) and probability of successfully obtaining the mobile location. FIG. 2 clearly demonstrates the exponentially increasing nature of the probability of success as a function of listening period which allows the trade-off between battery life and location accuracy.

The second class of location-finding systems employ a relatively low density of reference points (nodes 105). Thus, compared to the above first class, there is a relatively long distance between the mobile and reference nodes and the number of reference nodes that can be heard by the nodes 104 is relatively limited. To compensate for these two drawbacks, multiple measurements from the same reference node are usually taken and the average value is used as input to the triangulation technique.

Clearly a trade-off exists between the number of measurements (or samples) for each reference node and the accuracy of the averaged RSSI. Assuming a normal distribution for RSSI samples, according to the law of large numbers, the average RSSI value approaches the true mean with increased number of samples. However, the communication costs (e.g., battery consumption, energy) also increase with the number of gathered samples. Since RSSI-based location algorithm mostly depend on the hypothesis that RSSI strength decays exponentially over distance, the accuracy of the RSSI value directly translates to the error in the estimated location.

To estimate the number of RSSI samples needed to achieve a certain measurement accuracy for a given locating algorithm, Chernoff bounds are used which gives an exponentially decreasing bound on tail distributions of sums of independent random variables. Such exponentially decreasing bounds are well suited to be used in our trade-off mechanism. Note that the assumption on normal distribution of RSSI is only needed for an easy estimation of the range of RSSI values, which is required by the Chernoff bound theorem. The proposed technique and the following analysis themselves do not require the distribution of RSSI to be known *a priori.*

*Chernoff bounds theorem*:

Let $X_1$, $X_2$, ..., $X_m$ be independent and identically distributed (i.i.d.) random variable with

$E[X_i] = \mu$, where $E(x)$ is the expected value or mean of x; and

$|X_i| <= G$.

Let $S_m = X_1 + X_2 + ... + X_m$.

If $m \geq \dfrac{2G^2}{\varepsilon^2} \ln \dfrac{2}{(1-\delta)}$ , then

$\Pr[\left|\dfrac{S_m}{m} - \mu\right| \leq \varepsilon] > \delta$ where $\varepsilon$ and $\delta$ are arbitrary parameters.

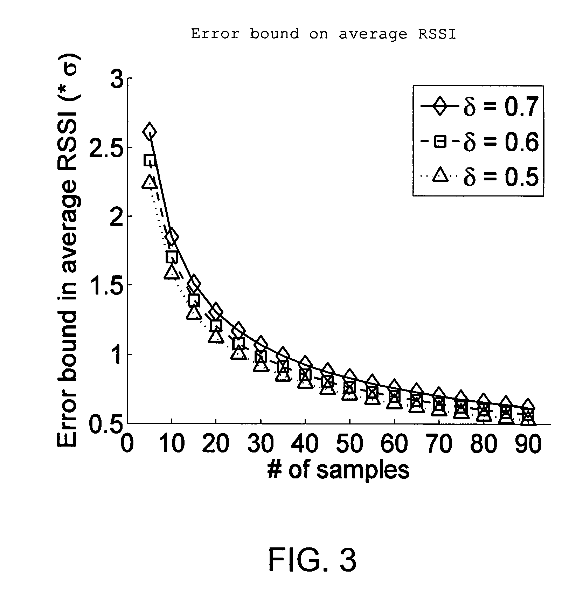

Consider a Gaussian distribution of RSSI samples, $N(\mu, \sigma^2)$ with $\sigma = 40$. Since 99.73% of the samples of a Gaussian distribution are within $3\sigma$ from the mean, we simplify G as $\mu+3\sigma$. To illustrate the trade-off using the Chernoff bound, we choose $\delta$ to be 0.5, 0.6, and 0.7, and then vary the number of RSSI samples from 5 to 90 in increments of 5. FIG. 3 shows the error bound on the average RSSI and $\varepsilon$, that can be guaranteed by the Chernoff bound with probability $\delta$. Note that Chernoff bound provides a sufficient but not necessary condition on the error bound.

The curve in FIG. 3 clearly shows that the probabilistic error bound decreases with the number of samples. For example, for $\delta = 0.5$, we observe that with 10 samples, the probabilistic error bound is at $1.6\sigma$ from the mean. If we increase the number of samples to 50, the probabilistic error bound decreases to $0.7\sigma$. The convexity of the curve also indicates that the marginal improve in the error bound diminishes with the number of samples. This clearly shows that moving from one RSSI sample per reference node to several samples per node is very cost-effective.

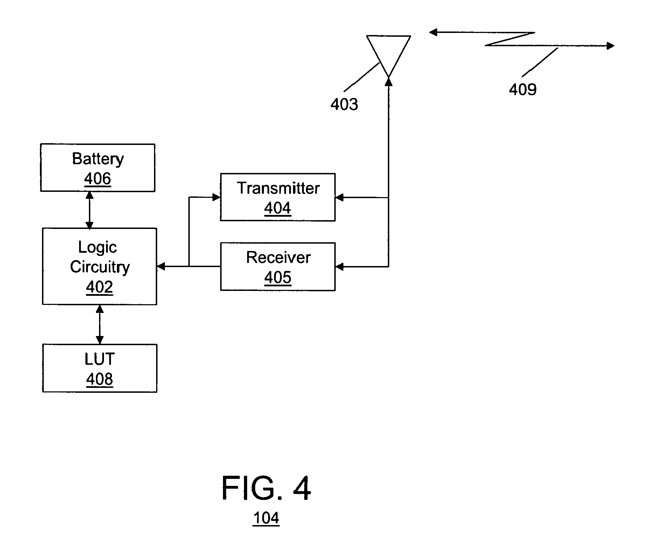

FIG. 4 is a block diagram of blind node 104 equipped to determine its location via signal-strength measurements. In a preferred embodiment of the present invention node 104 comprises antenna circuitry 403 coupled to transmitter circuitry 404 and receiver circuitry 405, in turn, coupled to logic circuitry 402. Battery 406 is provided to node 104. Although various forms for antenna 403, transmitter 404 and receiver 405, and logic circuitry 402 are envisioned, in a preferred embodiment of the present invention node 104 is formed from a Freescale Inc. MC13192 transceiver (transmitter 404 and receiver 405) coupled to a Motorola HC08 8-bit processor 402 or a COTS 8 or 16 bit processor. When node 104 wishes to determine its location, it receives over-the-air communication signal 409 transmitted from reference nodes 105. Communication signal 409, received from participating reference nodes 105 is broadcast on a periodic basis (e.g., once every 10 seconds). Once received by receiver 405, signal 409 is further analyzed to determine a signal strength between a plurality of reference nodes 105, and a location is determined for example, as described in P. Bahl and V. N. Padmanabhan, "Radar: An inbuilding RF-based user location and tracking system," IEEE Infocom 2000, Mar. 2000.

Since the signals 409 are broadcast periodically from nodes 105, the longer node 104 stays awake to receive signals 109, the more accurate any location estimate will be. In determining an amount of time to stay awake, logic circuitry 402 will access battery 406 to determine an amount of battery resources available. Logic circuitry 402 will then determine a particular probability of achieving a successful location that the location estimate requires. When battery resources 406 are below a threshold (e.g., 50%), logic circuitry 402 will utilize a minimum probability for success in determining how many time-slots to collect RSSI measurements, however, if battery resources are above the threshold, a higher probability of achieving a successful location may be utilized. Thus, when battery resources are low, a lower probability of achieving a successful location might be acceptable when compared to the probability of achieving a successful location required when battery resources are high.

After logic circuitry 402 determines a particular probability of achieving a successful location, it will then compute a number of time-slots (L) that it must remain awake for to achieve the particular probability of achieving a successful location. This is accomplished by utilizing tables similar to those shown in FIG. 2 and FIG. 3, which may be stored in look-up table 408. Logic circuitry 402 will then remain awake for L time slots, and compute a location based on the RSSI measurements taken within those L time slots.

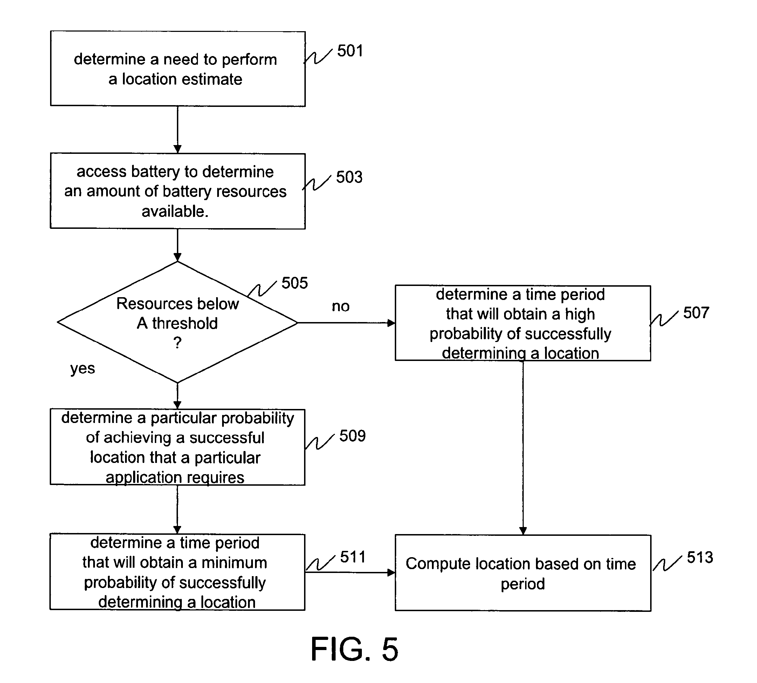

FIG. 5 is a flow chart showing operation of node 104. The logic flow begins at step 501 where logic circuitry 402 determines a need to perform a location estimate. At step 503 logic circuitry 402 accesses battery 406 to determine an amount of battery resources available. The logic flow proceeds to step 505 where logic circuitry 402 determines if the battery resources are below a threshold. If not, then logic circuitry 402 determines a time period (e.g., a number of time-slots (L)) (step 507) that will obtain a high probability of successfully determining a location (e.g., 95%).

If, however, it is determined that the battery resources are below the threshold, then the logic flow continues to step 509 where logic circuitry 402 will then determine a particular probability of achieving a successful location that a particular application requires. The particular probability preferably is based on battery resources and comprises a minimum acceptable probability for the application. For example, a certain application may require an 80% probability of successfully obtaining a location estimate. In other words, the application requires an 80% probability that the location estimate is within a certain margin of error. This margin of error, however, is determined by the specific triangulation algorithm that is utilized in the location system. Logic circuitry 402 then determines a time period to remain awake that will result in the minimum probability of successfully determining a location (step 511). The second value will obtain a lower probability of successfully determining a location (e.g., 80%). In this particular embodiment, the amount of time to stay awake comprises L timeslots. Logic circuitry 402 will then remain awake for L time slots, collecting wireless measurements (e.g., RSSI measurements) and compute a location based on the RSSI measurements taken within those L time slots (step 513).

It should be noted that an amount of time (L) that is needed to stay awake in order to achieve a certain probability of successful location is determined in steps 507 and 511 by logic circuitry 402 accessing a database or lookup table 408. The lookup table 408 will contain tables similar to those shown in FIG. 2 and FIG. 3, which may be stored in look-up table 408.

While the invention has been particularly shown and described with reference to a particular embodiment, it will be understood by those skilled in the art that various changes in form and details may be made therein without departing from the spirit and scope of the invention. For example, the above technique can be applied to other location techniques. Time-difference-of-arrival (TDOA)-based location may be used in place of RSSI-based location without changing the method of supporting the key application tradeoff. Systems based on two-way or round-trip timing estimation may also be supportable with the above technique; however the benefit in this second alternate case is not great since the mobile node could act as the initiator just as well as the responder (e.g. if it acts as the initiator, then it could tightly control its sleep cycle without needing to resort to the above-described method). Such changes come within the scope of the following claims:

## Claims

1. A method for a node within a wireless communication system to determine a location, the method comprising the steps of:

   determining battery resources;
   determining a particular probability of achieving a successful location that is based on the battery resources;
   determining an amount of time to stay awake, wherein the amount of time to stay awake is based on the particular probability of achieving the successful location;
   collecting wireless measurements during the amount of time that the node is awake; and
   determining the location based on the wireless measurements collected.

2. The method of claim 1 wherein the particular probability of achieving a successful location comprises a minimum acceptable probability of achieving a successful location.

3. The method of claim 1 wherein the amount of time to stay awake comprises a number of time slots (L).

4. The method of claim 1 wherein the wireless measurements comprise Received Signal Strength Indication measurements.

5. The method of claim 1 further comprising the step of:

determining if the battery resources are below a threshold; and
wherein the particular probability of achieving a successful location comprises a first probability of achieving a successful location when the battery resources are below the threshold; and
wherein the particular probability of achieving a successful location comprises a second probability of achieving a successful location when the battery resources are above the threshold.

6. A method for a node within a wireless communication system to determine a location, the method comprising the steps of:

determining battery resources available to the node;
determining a minimum probability of achieving a successful location that is based on the battery resources available to the node;
determining a number of time slots to stay awake, wherein the number of time slots to stay awake is based on the particular probability of achieving the successful location;
collecting received signal strength indication (RSSI) measurements during the time slots that the node is awake; and
determining the location based on the RSSI measurements collected.

7. A node comprising:

a battery;
logic circuitry accessing the battery to determine battery resources; and
wherein the logic circuitry also determines a particular probability of achieving a successful location that is based on the battery resources, determines an amount of time to stay awake, wherein the amount of time to stay awake is based on the particular probability of achieving the successful location, collects wireless measurements during the amount of time that the node is awake, and determines the location based on the wireless measurements collected.

8. The apparatus of claim 7 wherein the particular probability of achieving a successful location comprises a minimum acceptable probability of achieving a successful location.

9. The apparatus of claim 7 wherein the amount of time to stay awake comprises a number of time slots (L).

10. The apparatus of claim 7 wherein the wireless measurements comprise Received Signal Strength Indication measurements.

FIG. 1
100

Probability of success for N=64, M=12, and K=3.

FIG. 2

EP 2 209 345 A2

Error bound on average RSSI

Legend: ◇ $\delta = 0.7$; □ $\delta = 0.6$; △ $\delta = 0.5$

Y-axis: Error bound in average RSSI ($* \sigma$)

X-axis: # of samples

FIG. 3

FIG. 4
104

EP 2 209 345 A2

```
┌─────────────────────────────┐
│   determine a need to perform │ ⟋ 501
│      a location estimate      │
└─────────────────────────────┘
              │
              ▼
┌─────────────────────────────┐
│   access battery to determine │ ⟋ 503
│  an amount of battery resources│
│          available.           │
└─────────────────────────────┘
              │
              ▼
           ◇ Resources below ◇  ⟋ 505         ┌──────────────────────────────┐
          ◇   A threshold    ◇      no         │   determine a time period    │ ⟋ 507
          ◇       ?          ◇ ──────────────▶ │   that will obtain a high    │
           ◇                ◇                   │ probability of successfully  │
              │                                 │   determining a location     │
    yes       │                                 └──────────────────────────────┘
              ▼                                              │
┌─────────────────────────────┐                             │
│ determine a particular probability│ ⟋ 509                  │
│    of achieving a successful  │                            │
│  location that a particular   │                            │
│    application requires       │                            │
└─────────────────────────────┘                             │
              │                                              │
              ▼                                              ▼
┌─────────────────────────────┐            ┌──────────────────────────────┐
│    determine a time period   │ ⟋ 511      │  Compute location based on time│ ⟋ 513
│  that will obtain a minimum   │ ─────────▶ │           period             │
│ probability of successfully   │            └──────────────────────────────┘
│    determining a location     │
└─────────────────────────────┘
```

## FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **P. Bahl ; V. N. Padmanabhan.** Radar: An inbuilding RF-based user location and tracking system. *IEEE Infocom,* March 2000